# DEMANDE DE BREVET EUROPEEN

(11) **EP 0 988 819 A1**
(43) Date de publication de la demande: **29.03.2000**
(21) Numéro de dépôt: 99420187.9
(22) Date de dépôt: 07.09.1999
(51) Int. Cl.: A47J 31/057, A47J 31/44

(54) **Cafetière à chaudière**

(30) Priorité: 25.09.1998 FR 9812186
(71) Demandeur: SEB S.A., 69130 Ecully (FR)
(72) Inventeur: Darrigrand, Philippe, 64000 Pau (FR)

(57) **Abrégé**

- L'invention concerne une cafetière comprenant un bâti (4) comportant un socle (1) prévu pour recevoir un récipient de collecte (2), un réservoir (5) agencé principalement au dessus d'un porte-filtre (3) disposé au dessus dudit récipient, un conduit d'amenée (6) reliant le réservoir (5) à une chaudière (8), un conduit d'expulsion (7) issu de la chaudière (8) et débouchant au dessus du porte-filtre (3)
- Conformément à l'invention la chaudière (8) est agencée dans le socle (1).

## Description

La présente invention concerne une cafetière à chaudière. Dans les cafetières de ce type l'eau n'est chauffée qu'au moment d'être versée sur une mouture, et ce en passant dans une portion de conduit chauffé par une résistance électrique accolée, communément appelée chaudière.

Usuellement, et comme illustré dans le document GB 2 137 075, une telle cafetière comprend dans la partie antérieure un récipient de collecte surmonté d'un porte-filtre à l'intérieur duquel est placé un filtre où est versée une mouture de café, et dans la partie postérieure un réservoir d'eau fraîche en communication avec une chaudière avantageusement placée sous le récipient et propulsant de l'eau chaude dans un conduit vertical se terminant en un coude de versement sur la mouture. Fonctionnant à satisfaction, ces cafetières occupent néanmoins une place importante sur la table.

Afin de réduire autant que possible la surface de la base de la cafetière, et ainsi de réduire les coûts de fabrication, il a été proposé, notamment dans le document DE 26 000 13, d'agencer le réservoir d'eau fraîche au dessus du porte-filtre, et la chaudière entre le réservoir et le porte-filtre. On constate toutefois que de telles cafetières n'ont pas rencontré le succès commercial souhaité. Une première raison peut venir du volume important occupé par le réservoir et la chaudière au dessus du porte-filtre, imposant une contrainte dans l'élaboration de l'esthétique générale de la cafetière. Une autre raison peut venir du fait que cette masse donne au consommateur un sentiment plus ou moins justifié de risque d'instabilité.

Le but de la présente invention est une cafetière occupant le moins de place possible au sol, mais qui donne une sensation de stabilité et de fiabilité.

Ce but est atteint avec une cafetière comprenant un bâti comportant un socle prévu pour recevoir un récipient de collecte, un réservoir agencé principalement au dessus d'un porte-filtre disposé au dessus dudit récipient, un conduit d'amenée reliant le réservoir à une chaudière, un conduit d'expulsion issu de la chaudière et débouchant au dessus du porte-filtre, du fait que la chaudière est agencée dans le socle.

Il est inhabituel d'éloigner autant la chaudière de la sortie du réservoir et l'on aurait pu craindre que la température de l'eau à la sortie du conduit d'expulsion soit insuffisante. En fait on constate que l'appareil fonctionne correctement. La disposition du réservoir au dessus du porte-filtre permet de réduire l'emprise de la cafetière sur le plan de travail. De plus la base du réservoir peut avoir une forme quelconque, indépendante du volume nécessaire de la chaudière. En outre le poids de la chaudière étant dans le socle, on abaisse effectivement le centre de gravité de la cafetière, lui conférant ainsi une meilleure stabilité.

Avantageusement, le conduit d'amenée et le conduit d'expulsion sont en partie agencés dans une ou deux colonne(s) susceptible(s) de former un organe de préhension.

Cette disposition permet d'une part de faciliter la manipulation de la cafetière et d'autre part d'obtenir un gain de matière plastique.

Avantageusement, le conduit d'amenée comporte un clapet anti-retour disposé près de l'entrée de la chaudière.

Cette disposition permet d'éviter les retours d'eau chaude dans le réservoir.

Avantageusement, le porte-filtre est de forme sensiblement tronconique orienté vers le bas, et le réservoir est sensiblement de forme tronconique dans le prolongement de celle du porte-filtre.

Cette configuration facilite grandement le nettoyage de la cafetière et, incidemment, lui confère une esthétique remarquable.

Avantageusement, le conduit d'expulsion comporte une section disposée au dessus du niveau maximum de l'eau dans la partie supérieure du réservoir.

Cette disposition permet d'éviter que le conduit d'expulsion ne soit apparent de l'extérieur. Il est souhaitable que le conduit d'expulsion comprenne une partie disposée au dessus du niveau maximum de l'eau dans le réservoir pour pouvoir amorcer dans tous les cas un effet de siphon lors de la distribution d'eau chaude.

Avantageusement une ouverture est ménagée dans la partie supérieure de la section du conduit d'expulsion située dans la partie supérieure du réservoir.

Cette disposition permet d'évacuer la vapeur présente dans le conduit.

Avantageusement, la section du conduit d'expulsion située dans la partie supérieure du réservoir se prolonge par une section descendant au sein du réservoir et comportant un tube débouchant dans le fond du réservoir au dessus du porte-filtre.

Selon une réalisation préférée, ce tube est entouré par une cheminée dont l'extrémité supérieure se situe au dessus du niveau d'eau dans le réservoir.

Une telle disposition permet d'évacuer la vapeur présente dans le porte-filtre vers le réservoir et de la condenser.

Avantageusement l'espace entre le bord supérieur du porte-filtre et le fond du réservoir est inférieur à 1 mm. Un joint peut aussi être monté entre le porte-filtre et le réservoir. Le porte-filtre peut aussi être monté mobile en rotation sur un axe associé à un ressort prévu pour plaquer le porte-filtre sous le réservoir.

Ces dispositions permettent d'éviter les échappements de vapeur et les déperditions d'arômes issus du porte-filtre hors de la cafetière au niveau de la jointure entre le porte-filtre et le réservoir.

L'invention sera mieux comprise à l'étude de modes de réalisation pris à titre nullement limitatifs et illustrés dans les figures annexées dans lesquelles :
- la figure 1 est une vue de coté en coupe d'un exemple de réalisation d'une cafetière selon l'invention, dont un détail est montré à la figure 1a.
- la figure 2 est une vue de dos d'un exemple de réalisation d'une cafetière selon l'invention.
- la figure 3 est une vue schématique partielle en coupe d'une variante de réalisation d'une cafetière selon l'invention.
- la figure 4 est une vue schématique partielle en coupe d'une autre variante de réalisation d'une cafetière selon l'invention.

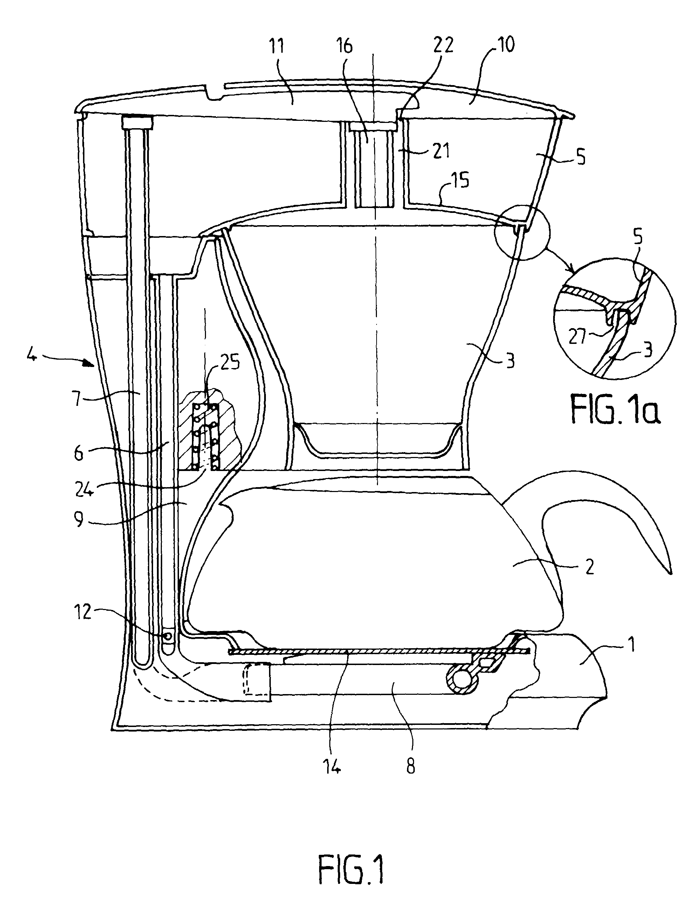

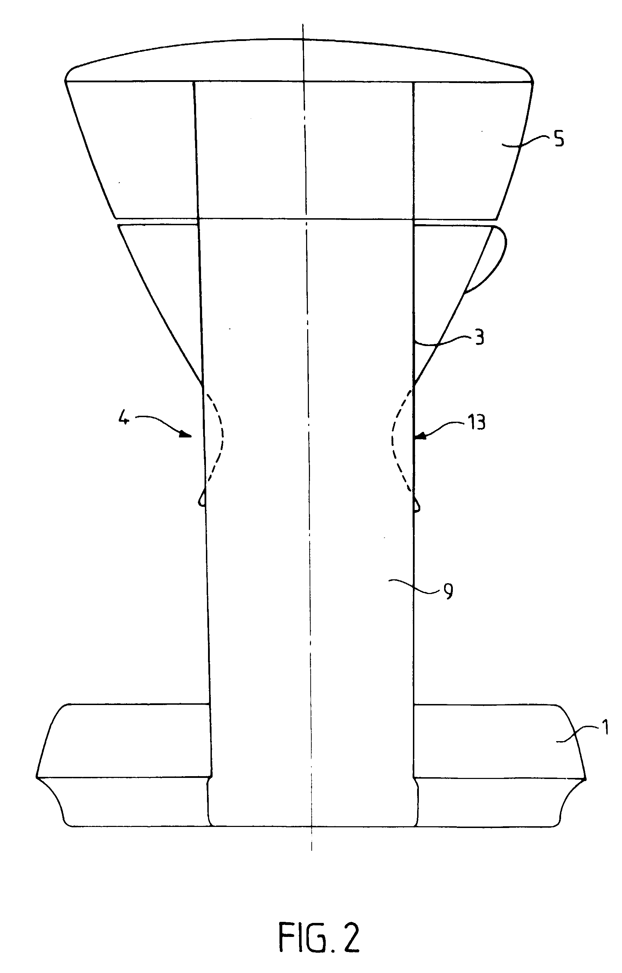

La cafetière montrée aux figures 1 et 2 comprend un bâti 4 comportant un socle 1 prévu pour recevoir un récipient de collecte 2. Un porte-filtre 3 disposé au dessus dudit récipient est avantageusement monté pivotant sur le bâti 4. Un réservoir 5 est agencé principalement au dessus du porte-filtre 3. Un premier conduit 6 d'amenée de l'eau froide relie le réservoir 5 à une chaudière 8. Un deuxième conduit 7 d'expulsion de l'eau chaude issu de la chaudière 8 débouche au dessus du porte-filtre 3.

Selon l'invention, la chaudière 8 est agencée dans le socle 1.

Le socle 1 comprend avantageusement une plaque 14 métallique disposée en relation thermique avec la chaudière 8, prévue pour recevoir le récipient 2.

Le réservoir 5 comporte au dessus du porte-filtre 3 un fond 15 en forme de dôme. Le conduit d'expulsion 7 issu de la chaudière 8 comporte une section 11 sensiblement horizontale disposée au dessus du niveau maximum de l'eau dans le réservoir 5. Cette section est prolongée par un tube 16 descendant et débouchant dans le fond 15 au dessus du porte-filtre 3. Notamment la section 11 se trouve à proximité d'un couvercle 10 fermant la partie supérieure du réservoir 5.

Le porte-filtre 3 est monté mobile en rotation sur un axe 24 vertical associé à un ressort 25 prévu pour plaquer le porte-filtre 3 vers le haut contre le réservoir 5. Tel que montré à la figure 1a, une gorge 27 est ménagée sous le réservoir 5 pour recevoir la partie supérieure du porte-filtre 3.

Un clapet anti-retour 12 est disposé dans le conduit d'amenée 6 près de l'entrée de la chaudière 8.

Tel que monté à la figure 2, le réservoir 5 est relié au socle 1 par une partie du bâti 4 formant une colonne 9. Tel que montré à la figure 1, le conduit d'amenée 6 et le conduit d'expulsion 7 sont en partie agencés dans la colonne 9. La colonne 9 est susceptible de former un organe de préhension facilitant le déplacement de la cafetière. Tel que montré à la figure 2, la colonne 9 présente un diamètre plus large qu'une partie 13 du porte-filtre 3. A titre de variante un espace libre peut être ménagé entre la colonne 9 et le porte-filtre 3. A titre de variante également, le bâti 4 forme deux colonnes 9, le conduit d'amenée 6 étant en partie agencé dans l'une des colonnes 9 et le conduit d'expulsion 7 étant en partie agencé dans l'autre des colonnes 9.

Tel que montré à la figure 2, le porte-filtre 3 est de forme sensiblement tronconique orienté vers le bas, et le réservoir 5 est sensiblement de forme tronconique dans le prolongement de celle du porte-filtre.

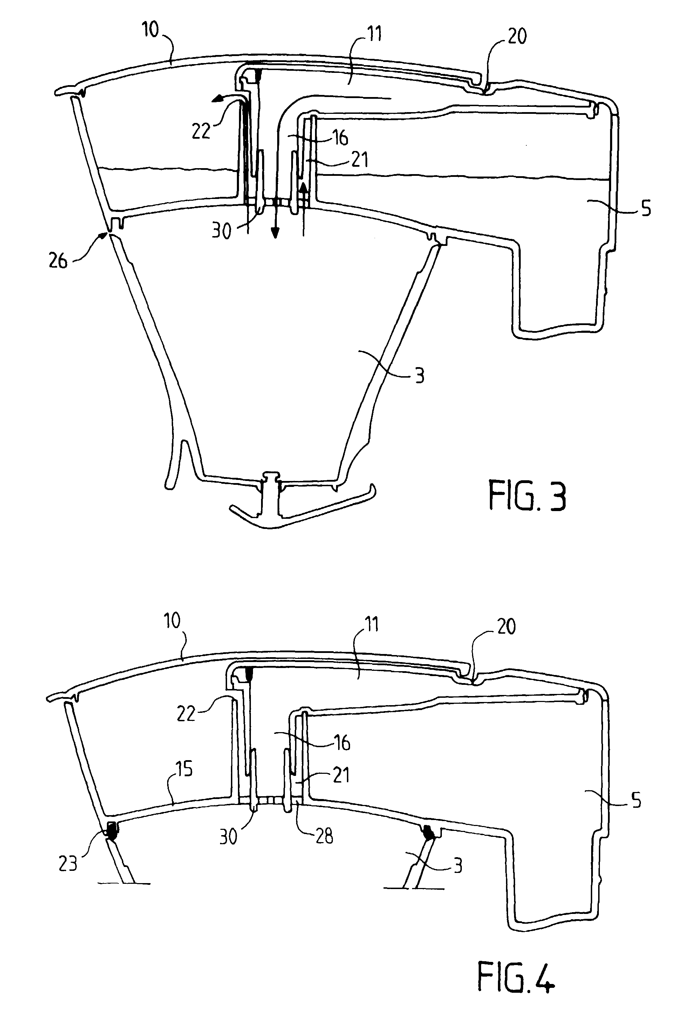

Tel que montré aux figures 3 et 4, une ouverture 20 est ménagée dans la partie supérieure de la section 11 du conduit d'expulsion. Pour des considérations de simplification de fabrication le tube descendant 16 peut se présenter en deux parties s'emboîtant: une prolongeant vers le bas la section 11 et une protubérant au niveau d'une ouverture ménagée dans le fond 15 du réservoir. Par ailleurs le tube 16 est entouré par une cheminée 21 dont l'extrémité inférieure 28 est ouverte en regard de la mouture contenue dans le porte-filtre 3 et l'extrémité supérieure 22 se situe au dessus du niveau d'eau dans le réservoir 5.

Tel que bien visible aux figures 3 et 4, le tube 16 est emmanché sur un tube 30 issu de la pièce formant le réservoir 5, le tube 30 étant disposé à l'intérieur de la cheminée 21.

Selon la variante de réalisation de la figure 3, un espace 26 aussi faible que possible est ménagé entre le porte-filtre 3 et le réservoir 5. L'espace 26 est de préférence inférieur à 1 mm.

Selon la variante de réalisation de la figure 4, un joint 23 est monté entre le porte-filtre 3 et le réservoir 5.

Le fonctionnement de l'appareil est le suivant. L'utilisateur remplit d'eau le réservoir 5, dispose un filtre et de la mouture dans le porte-filtre 3, dispose le récipient 2 sur le socle 1, et alimente électriquement la chaudière 8. L'eau issue du réservoir 5 descend dans la chaudière 8 par le conduit d'amenée 6. L'eau chauffée par la chaudière 8 est expulsée par le conduit d'expulsion 7 dans le porte-filtre 3. La boisson peut alors s'écouler dans le récipient 2. La vapeur présente dans le conduit 7 peut s'échapper par l'ouverture 20. La vapeur présente dans le porte-filtre 3 est dirigée vers la cheminée 21 et peut se condenser dans le réservoir 5. Le ressort 25 plaquant le porte-filtre 3 contre le résevoir 5, le joint 23 monté entre le porte-filtre 3 et le réservoir 5, l'espace 26 réduit limité entre le porte-filtre 3 et le réservoir 5 empêchent ou limitent l'échappement de vapeur entre le porte-filtre 3 et le réservoir 5.

De nombreuses améliorations peuvent être apportées à cette cafetière dans le cadre des revendications. En particulier, la ou les colonnes peuvent présenter diverses sections. Il est aussi possible de combiner les différents moyens prévus pour contrôler l'évacuation de la vapeur.

## Revendications

1. Cafetière comprenant un bâti (4) comportant un socle (1) prévu pour recevoir un récipient de collecte (2), un réservoir (5) agencé principalement au dessus d'un porte-filtre (3) disposé au dessus dudit récipient, un conduit d'amenée (6) reliant le réservoir (5) à une chaudière (8), un conduit d'expulsion (7) issu de la chaudière (8) et débouchant au dessus du porte-filtre (3), caractérisé en ce que la chaudière (8) est agencée dans le socle (1).

2. Cafetière selon la revendication 1, caractérisée en ce que le conduit d'amenée (6) et le conduit d'expulsion (7) sont en partie agencés dans une ou deux colonne(s) (9) susceptible(s) de former un organe de préhension.

3. Cafetière selon l'une des revendications 1 ou 2, caractérisée en ce que le conduit d'amenée (6) comporte un clapet anti-retour (12) disposé près de l'entrée de la chaudière (8).

4. Cafetière selon l'une des revendications 1 à 3, dont le porte-filtre (3) est de forme sensiblement tronconique orienté vers le bas, caractérisée en ce que le réservoir (5) est sensiblement de forme tronconique dans le prolongement de celle du porte-filtre (3).

5. Cafetière selon l'une des revendications 1 à 4, caractérisée en ce que le conduit d'expulsion (7) comporte une section (11) disposée au dessus du niveau maximum de l'eau dans la partie supérieure du réservoir (5).

6. Cafetière selon la revendication 5, caractérisée en ce qu'une ouverture (20) est ménagée dans la partie supérieure de la section (11).

7. Cafetière selon l'une des revendications 5 ou 6, caractérisée en ce que la section (11) se prolonge par une section descendant au sein du réservoir et comportant un tube (16) débouchant dans le fond (15) du réservoir (5) au dessus du porte-filtre (3).

8. Cafetière selon la revendication 7, caractérisée en ce que le tube (16) est entouré par une cheminée (21) dont l'extrémité supérieure (22) se situe au dessus du niveau d'eau dans le réservoir (5).

9. Cafetière selon l'une des revendications 1 à 8, caractérisée en ce que l'espace entre le bord supérieur du porte-filtre (3) et le fond du réservoir (5) est inférieur à 1 mm.

10. Cafetière selon l'une des revendications 1 à 9, caractérisée en ce qu'un joint (23) est monté entre le porte-filtre (3) et le réservoir (5).

11. Cafetière selon l'une des revendications 1 à 10, caractérisée en ce que le porte-filtre (3) est monté mobile en rotation sur un axe (24) comprenant un ressort (25) prévu pour plaquer le porte-filtre (3) sous le réservoir (5).
